# EUROPÄISCHE PATENTANMELDUNG

(11) **EP 1 860 009 A2**
(43) Veröffentlichungstag der Anmeldung: **28.11.2007**
(21) Anmeldenummer: 07009466.9
(22) Anmeldetag: 11.05.2007
(51) Int. Cl.: B60T 13/68

(54) **Vorgesteuertes Ventil**

(30) Priorität: 23.05.2006 DE 102006024183
(71) Anmelder: Robert Bosch GmbH, 70184 Stuttgart (DE)
(72) Erfinder: Kane, Brian, 97816 Lohr (DE); Grün, Jürgen, Dr., 97816 Lohr (DE)

(57) **Zusammenfassung**

Die Erfindung betrifft ein vorgesteuertes Ventil mit einem 2/2-Wege-Haupkolben und zwei schnell schaltenden 2/2-Wege-Pilotventilen zur Vorsteuerung des Hauptkolbens, um großen Volumenströme schnell schalten zu können. Derartig vorgesteuerte Ventile lassen sich in Gruppen zur Realisierung eines 3/2-Wegeventils und in Gruppen von einer Vielzahl von derartigen Wegeventile zusammenfassen.

## Beschreibung

Die Erfindung betrifft ein Ventil, das schnell schaltbar ist, insbesondere ein Hydraulikventil, mit dem bei Bremsvorgängen von Lastkraftwagen ein Hydraulikfluidstrom schnell schaltbar ist.

Aus dem Stand der Technik sind Druckluftbremsen von Lastkraftwagen bekannt, bei denen Aggregate für die Luftaufbereitung notwendig sind und die einzelnen Komponenten eine große Bauform haben.

Für eine Verringerung der Bauform und ein schnelles Schalten gelangen bei PKWs insbesondere zur Antiblockiersystem-Steuerung Hydraulikventile zum Einsatz, wie diese beispielsweise im Dokument EP 1623900A1 in Form eines stromlos offenen Ventils und in der DE 102004033864A1 in Form eines stromlos geschlossenen Ventils gezeigt sind.

Derartige Ventile können jedoch nur einen geringen Volumenstrom schalten, so dass keine Eignung dieser Ventile für einen breiten Einsatz zum Schalten großer Volumenströme bei LKWs besteht.

Die Aufgabe der vorliegenden Erfindung besteht daran, ein Ventil für das schnelle Schalten von großen Durchflussmengen mit vertretbarem Kostenaufwand zu schaffen.

Diese Aufgabe wird durch ein vorgesteuertes Ventil nach Anspruch 1, eine Ventileinheit nach Anspruch 10 und durch Ventilblöcke nach Anspruch 11 und 12 gelöst.

Ein erfindungsgemäßes vorgesteuertes Ventil weist einen 2/2-Wege-Hauptkolben und zwei schnell schaltende 2/2-Wege-Pilotventile zur Vorsteuerung des Hauptkolbens auf. Damit lässt sich ein großer Volumenstrom mit hoher Geschwindigkeit schalten.

Vorzugsweise ist ein Pilotventil in eine mit einem Druckanschluss verbundene Druckleitung geschaltet und ein weiteres Pilotventil in eine mit einem Tank verbundenen Tankleitung geschaltet. Dieses ermöglicht eine Druckmittelverbindung zwischen einem vom Hauptkolben begrenzten Druckraum mit dem Druckanschluss oder dem Tankanschluss und somit ein Schalten mit hoher Geschwindigkeit.

Das Druckleitungs-Pilotventil ist vorzugsweise stromlos geschlossen und das Tankleitungs-Pilotventil vorzugsweise stromlos offen, wodurch der Hauptkolben entlastet ist. Bei Bestromung der Pilotventile wird das Druckleitungs-Pilotventil geöffnet und das Tankleitungs-Pilotventil geschlossen, wodurch der Hauptkolben in Schließstellung vorgespannt wird.

Als Pilotventile gelangen bevorzugt Ventile für Antiblockersysteme für PKWs zum Einsatz. Die durch diese schnell schaltenden Ventile steuerbaren Volumenströmen sind als Vorsteuervolumenströme für Antiblockiersysteme bei LKWs ausreichend.

Mit derartigen Anordnung lassen sich Schaltzeiten von weniger als 15 ms realisieren. Der Hauptkolben ist vorzugsweise direkt und dicht in metallischen Gehäuse geführt, wodurch auf weitere Komponenten zwischen den Hauptkolben und Metallgehäuse verzichtbar ist und somit die Baugröße des vorgesteuerten Ventils gering gestaltet werden kann.

Es wird bevorzugt, den Hauptkolben aus Kunststoff zu fertigen, wodurch keine mechanische Nacharbeit notwendig ist und die Hauptkolben in einem Metall-Ventilgehäuse beispielsweise aus Aluminium oder Stahl einfach einsetzbar ist und die Führungsfläche des Hauptkolbens gleichzeitig als Dichtung dienen kann.

Es wird auch auf Grund der verwendeten Spritzgießtechnik bevorzugt, den Hauptkolben dünnwandig auszugestalten, um aufgrund des geringen Gewichts ein schnelles Schalten zu ermöglichen.

Gemäß einer vorteilhaften Weiterbildung weist eine als 3/2-Wegeventil ausgebildete Ventilgruppe zwei der vorstehend beschriebenen vorgesteuerten Ventile auf, wodurch sich eine Druckmittelverbindung zwischen einem Druckanschluss und einem Auslassanschluss und dem Auslassanschluss und dem Tankanschluss mit hoher Geschwindigkeit und hohen Volumenstrom schalten lässt.

Bei einem derartigen 3/2-Wegeventil ist ein erstes Pilotventil zur Verbindung mit einem Druckanschluss stromlos geschlossen, ein zweites Pilotventil zur Verbindung mit einem Tankanschluss stromlos offen, ein drittes Pilotventil zur Verbindung mit einem Druckanschluss stromlos offen und ein viertes Pilotventil zur Verbindung mit einem Tankanschluss stromlos geschlossen. Somit kann bei stromlosen Pilotventilen in einem Druckraum, der die Druckmittelverbindung zwischen einem Auslassanschluss und einem Tankanschluss schaltet, der Druck am Einlassanschluss vorliegen, so dass die Druckmittelverbindung zwischen Auslassanschluss und Tankanschluss zugesteuert ist. Hingegen liegt bei bestromten Pilotventilen in diesem Druckraum der Druck am Tankanschluss an, so dass die Druckmittelverbindung zwischen Auslassanschluss und Tankanschluss aufgesteuert wird.

Ferner wird erfindungsgemäß ein Ventilblock mit einem vorstehend beschriebenen 3/2-Wegeventil und ein Ventilblock mit zwei vorstehend beschriebenen 3/2-Wegeventilen vorgesehen. Auf diese Weise ist mit geringem Platzbedarf ein Antiblockiersystem auf Hydraulikbasis für Lastkraftwagen umsetzbar.

Erfindungsgemäße Weiterbildungen sind Gegenstand weiterer Unteransprüche.

Nachfolgend wird die vorliegende Erfindung anhand schematischer Zeichnung beschrieben. Es zeigen:
Fig. 1 ein Schaltschema für ein vorgesteuertes Ventil entsprechend einem ersten Ausführungsbeispiel der Erfindung,
Fig. 2 eine Querschnittsansicht eines Ventilblocks entsprechend dem ersten Ausführungsbeispiel,
Fig. 3 eine Schnittansicht der ebene I-I aus Fig. 2 des Ventilblocks entsprechend dem ersten Ausführungsbeispiel
Fig. 4 ein Schaltschema für das vorgesteuerte Ventil entsprechend dem zweiten Ausführungsbeispiel,
Fig. 5 eine Prinzipdarstellung für das Schaltschema, das in einem dritten Ausführungsbeispiel der Erfindung umgesetzt wird,
Fig. 6 eine Draufsicht auf einen Ventilblock entsprechend dem dritten Ausführungsbeispiel der Erfindung, bei dem zwei Ventileinheiten entsprechend dem zweiten Ausführungsbeispiel miteinander kombiniert sind,
Fig. 7 eine Schnittansicht des Ventilblocks aus Fig. 6 in der Ebene II-II,
Fig. 8 eine Schnittansicht des Ventilblocks aus Fig. 6 in der Ebene III-III,
Fig. 9 eine teilgeschnittene Untersicht des Ventilblocks aus Fig. 6,
Fig. 10 eine Ansicht von rechts des Ventilblocks aus Fig. 6 und
Fig. 11 eine Schnittansicht in der Ebene IV-IV von Fig. 10.

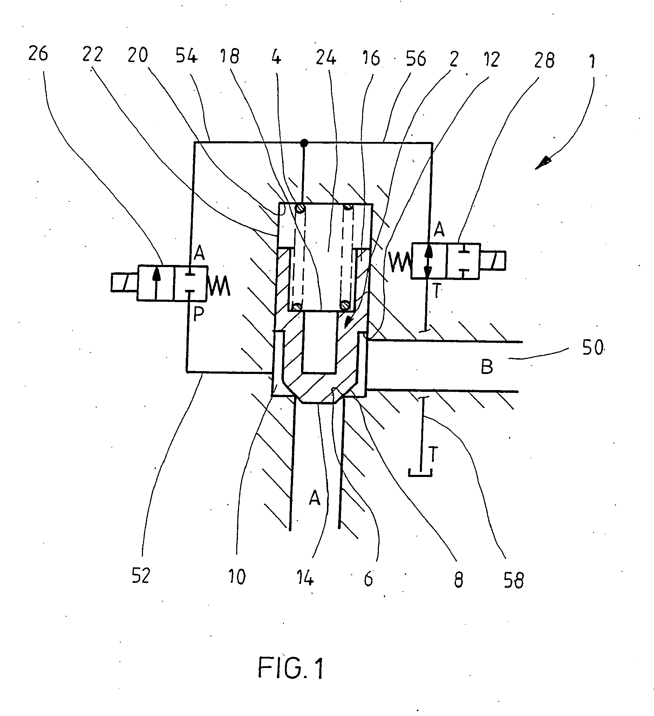

Fig. 1 zeigt ein Schaltschema eines ersten Ausführungsbeispiels eines vorgesteuerten Ventils 1. Bei diesem vorgesteuerten Ventil 1 ist ein Hauptkolben 2 einer Hauptstufe vorgesehen, der über eine Feder 4 gegen einen Ventilsitz 6 vorgespannt wird. Beim Abheben einer Sitzfläche 8 des Hauptkolbens 2 von dem Ventilsitz 6 wird eine Druckmittelverbindung zwischen einem Einlassanschluss A, der koaxial mit der Mittelachse des Hauptkolbens 2 verläuft, mit einem senkrecht zur Vertikalachse vorgesehenen Auslassanschluss B aufgesteuert. Der Hauptkolben 2 ist durch eine Ringfläche 12 mit einer Flächendifferenz ausgebildet, wobei der ventilseitige Durchmesser kleiner als der rückwärtige Durchmesser ist. Stromabwärts der Sitzfläche 8 ist um den Hauptkolben herum ein durch die Ringfläche 12 begrenzter Ringraum 10 vorgesehen.

Der Druck am Einlassanschluss A liegt am Hauptkolben 2 an einer Fläche 14 an, die durch die Sitzfläche 8 des Hauptkolbens begrenzt ist. Auf die Ringfläche 12 des Hauptkolbens wirkt der Druck am Auslassanschluss B in Öffnungsrichtung des Hauptkolbens 2.

Der Hauptkolben weist an dem zur Fläche 14 entgegengesetzten Abschnitt einen Hohlzylinderabschnitt 16 auf, in den eine Feder 4 eintaucht und an dessen stirnseitige Bodenfläche 18 diese angreift. Die Feder 4 ist an einem Stützabschnitt 20 einer Aufnahmebohrung 22, in der der Hauptkolben 2 mit seinem größeren Durchmesser geführt wird, abgestützt und drückt gegen eine durch den Hohlzylinderabschnitt begrenzte Bodenfläche 18 des Hauptkolbens, um den Hauptkolben in Schließrichtung zu spannen. Der Druckraum 24 wird durch die Rückseite des Hauptkolbens 2 begrenzt.

Die Hauptstufe mit dem Hauptkolben 2 des ersten Ausführungsbeispiels wird durch zwei schnell schaltende 2/2-Wege-Pilotventile 26, 28 vorgesteuert.

Das Pilotventil 26 ist ein stromlos geschlossenes 2/2-Wegeventil, wie es beispielsweise in der Druckschrift DE 102004033846A1 beschrieben ist, und hat einen Druckanschluss P sowie einen Arbeitsanschluss A. Der Ringraum 10 am Hauptkolben 2 ist über einen Vorsteuerkanal 52 mit dem Druckanschluss des Pilotventils 26 verbunden, dessen Arbeitsanschluss A über den Druckkanal 54 mit dem Druckraum 24 in Druckmittelverbindung steht. Im Ruhezustand ist das Pilotventil 26 geschlossen, wobei eine Druckmittelverbindung zwischen dem Druckanschluss P und dem Arbeitsanschluss A blockiert ist. Im bestromten Zustand ist das Pilotventil 26 offen, wobei die Druckmittelverbindung zwischen dem Druckanschluss P und dem Arbeitsanschluss A geöffnet ist, so dass über das Pilotventil 26 die Druckmittelverbindung zwischen dem Ringraum 10 am Hauptkolben 2 und dem Druckraum 24 hergestellt ist.

Das Pilotventil 28 ist ein stromlos offenes Ventil, wie es beispielsweise in der Anmeldung EP1623900A1 beschrieben ist, und hat einen Tankanschluss T sowie einen Arbeitsanschluss A. Der Druckraum 24 am Hauptkolben 2 ist über einen Vorsteuerkanal 56 mit dem Arbeitsanschluss A des Pilotventils 28 verbunden, dessen Tankanschluss A über einen Tankkanal 58 mit einem Tankanschluss T in Druckmittelverbindung steht. Im bestromten Zustand ist das Pilotventil 28 geschlossen, wobei eine Druckmittelverbindung zwischen dem Tankanschluss T und dem Arbeitsanschluss A blockiert ist. Im stromlosen Zustand ist das Pilotventil 28 offen, wobei die Druckmittelverbindung zwischen dem Tankanschluss T und dem Arbeitsanschluss A geöffnet ist, so dass über das Pilotventil 28 die Druckmittelverbindung zwischen dem Druckraum 24 am Hauptkolben 2 und dem Tankanschluss T hergestellt ist.

Nachfolgend wird die Funktion des vorgesteuerten Ventils 1 entsprechen dem ersten Ausführungsbeispiel beschrieben.

In der Anfangsposition wird die Hauptkolben 2 über die Feder 4 auf den Ventilsitz 6 gedrückt. Die Pilotventile 26 und 28 sind stromlos, so das das Pilotventil 26 keine Druckmittelverbindung zwischen dem Ringraum 10 und dem Druckraum 24 herstellt, während das Pilotventil 26 offen ist, so dass im Druckraum 24 im Wesentlichen Tankdruck herrscht.

Auf diese Weise wirkt der am Auslassanschluss B anliegende Druck auf die Ringfläche 12 in Öffnungsrichtung des Hauptkolbens 2. Auf die Fläche 14 wirkt der Druck am Einlassanschluss A. Aufgrund der Entlastung des Druckraums 24 zum Tank ist zunächst nur die Stirnfläche 14 wirksam. Ein schnelles Öffnen des Hauptkolbens ist dann möglich, wenn die Summe der Kraft, die durch den am Einlassanschluss A auf die Fläche 14 wirkenden Druck erzeugt wird, und der Kraft, die durch den Druck am Auslassanschluss B auf die Ringfläche 12 wirkt, größer als die Summe aus der Federkraft der Feder 4 und der Kraft, die auf Grund des Drucks im Druckraum 24 in Schließrichtung des Hauptkolbens 2 wirkt, ist.

Wenn das vorgesteuerte Ventil 1 des ersten Ausführungsbeispiels mit hoher Geschwindigkeit aus der offenen in die geschlossene Schaltstellung gebracht werden soll, so werden beide Pilotventile 26, 28 bestromt, so dass das Pilotventil 26 in seine offene Schaltstellung gelangt, und das Pilotventil 28 geschlossen wird.

Auf diese Weise wird eine Druckmittelverbindung zwischen dem Ringraum 10 und dem Druckraum 24 hergestellt, während die Druckmittelverbindung zwischen dem Druckraum 24 und dem Tank unterbrochen wird. Der Druck im Ringraum 10 ist etwa so groß wie der am Einlassanschluss A. Der rückwärtige Durchmesser des Hauptkolbens ist etwa so groß wie die Summe der Ringfläche 12 und der Stirnfläche 14. Aufgrund dieser Flächendifferenz und des etwa gleichen Drucks wird der Hauptkolben 2 mit hoher Geschwindigkeit geschlossen.

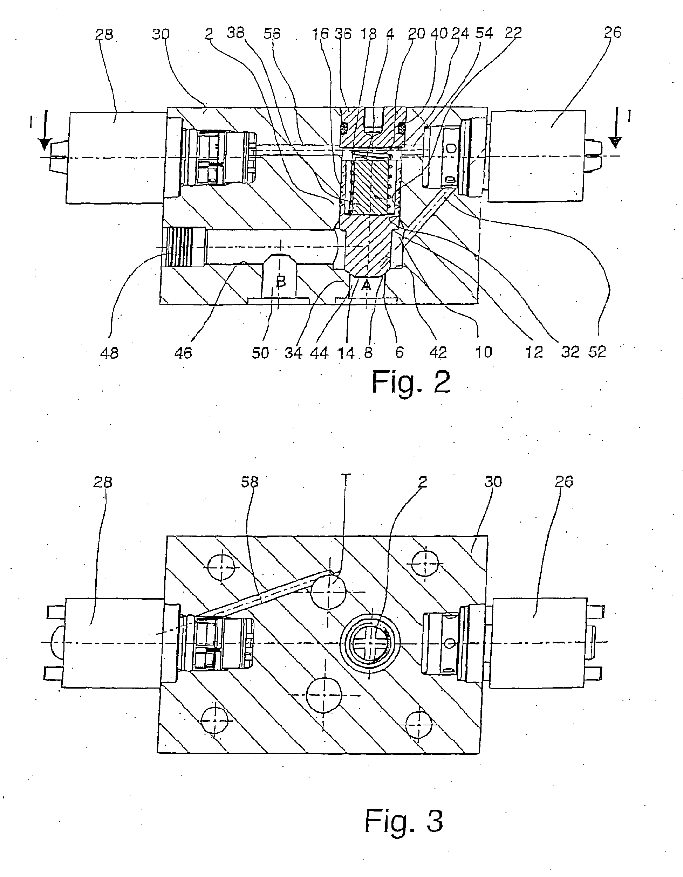

Die Fig. 2 und 3 zeigen den Aufbau eines in ein Ventilgehäuse 30 eingebrachte vorgesteuerten Ventils entsprechend dem Schaltschema von Fig. 1. Fig. 2 zeigt eine Quersichtansicht des vorgesteuerten Ventils 1, während Fig. 3 eine Schnittansicht des Ventils in der Ebene I-I von Fig. 2 darstellt.

Das Ventilgehäuse 30 ist in der Ausführung entsprechend den Fig. 2 und 3 quaderförmig ausgestaltet und hat eine Querbohrung 32 mit einer Zurückstufung 34 durch die der Ventilsitz 6 ausgebildet ist. Der zur Zurückstufung 34 entgegengesetzte Endabschnitt der Querbohrung 32 wird durch eine Verschlussschraube 36 verschlossen, die den Stützabschnitt 20 für die Feder 4 aufweist. Zwischen der Verschlussschraube 36 und der Zurückstufung 34 ist die Aufnahmebohrung 22 für den Hauptkolben 2 vorgesehen. Der Hauptkolben 2 hat, wie bereits Fig. 1 beschrieben, eine Sitzfläche 8 zur Anlage mit dem Ventilsitz 6 sowie einen entgegengesetzt zur Sitzfläche 8 ausgebildeten Hohlzylinderabschnitt 16, zur Aufnahme der Feder 4.

In dem Hohlzylinder 16 des Hauptkolbens 2 aus Fig. 2 ist ein Zentrierbolzen 38 im Wesentlichen in Zylinderform befestigt, durch den die Feder geführt wird. Die Verschlussschraube 36 ist in Bezug auf den innen Umfang der Querbohrung 32 durch einen Dichtring 40 abgedichtet. Benachbart zur Ringfläche 12 ist in der Aufnahmebohrung 22 ein radial erweiterter Abschnitt 42 vorgesehen, so dass der Ringraum 10 im Vergleich zu Radialabmessung der Ringfläche 12 radial erweitert ist. Die höhere Radialabmessung des Ringraums 10 ist vorteilhaft, um eine gleichmäßige Druckmittelverteilung radial außerhalb des Hauptkolbens abzusichern.

Der Einlassanschluss A mündet in den radial erweiterten Abschnitt. Eine Längsbohrung 46 ist senkrecht zu Querbohrung 32 in das Ventilgehäuse 30 eingebracht und mündet in den Ringraum 10 radial außerhalb des Hauptkolbens 2. Die Längsbohrung 46 ist durch ein Verschlussschraube 48 nach außen hin abgedichtet. Von der Längsbohrung 46 zweigt ein Auslasskanal 50 zum Auslassanschluss B ab. Ebenfalls senkrecht zu Querbohrung 32 sind in entgegengesetzte Endabschnitte des Ventilgehäuses die Pilotventile 26 , 28 eingebracht. Ein Vorsteuerkanal 52 führt vom Ringraum 10 zum stromlos geschlossenen Pilotventil 26, das über einen parallel zur Längsbohrung 46 vorgesehenen Druckkanal 54 mit dem Druckraum 24 verbunden ist.

Ebenfalls parallel zur Längsbohrung 46 ist ein Vorsteuerkanal 56 in Druckmittelverbindung mit dem Druckraum 24 vorgesehen, wobei dieser Vorsteuerkanal 56 zu dem stromlos offenen Pilotventil 28 führt, das über einen Tankkanal 28 mit einem Tankanschluss T am Ventilgehäuse 30 verbindbar ist.

Der Hauptkolben 2 ist ein Sitzkolben, der nach einem Kunststoffspritzgießverfahren hergestellt wird. Ein bevorzugter Kunststoff ist Poly-Ether-Ether-Keton (PEEK), in den zur Verstärkung der Steifigkeit Kohlefaser, vorzugsweise mit einem Anteil von 30%, eingearbeitet sein kann.

Für den Hauptkolben 2 ist ein beliebiges Material verwendbar, jedoch vorzugsweise Kunststoff. Ein derartiger Sitzkolben ist fertigungstechnisch einfach und kostengünstig herstellbar und weist ein geringes Gewicht auf, wodurch ein gutes Ansprechverhalten gewährleistet werden kann.

In den Außenumfang des Hohlzylinderabschnitt 16 des Hauptkolbens 2 sind vorzugsweise ringförmige Ausnehmungen eingebracht. Das Ventilgehäuse 30 ist vorzugsweise aus Metall, beispielsweise aus Aluminium oder Stahl gefertigt. Durch in den Außenumfang des Hauptkolbens eingebrachte ringförmige oder spiralförmige Ausnehmungen kann die Außenumfangsfläche des Hohlzylinderabschnitt 16 als Führungsfläche mit Dichtwirkung gegenüber dem Ventilgehäuse dienen.

Die Schaltzeiten der Pilotventile 26, 28 sind kleiner als 15 ms, so dass der Hauptkolben beim Schalten großer Hydraulikfluidmengen vom Einlassanschluss A zum Auslassanschluss B mit hoher Geschwindigkeit steuerbar ist.

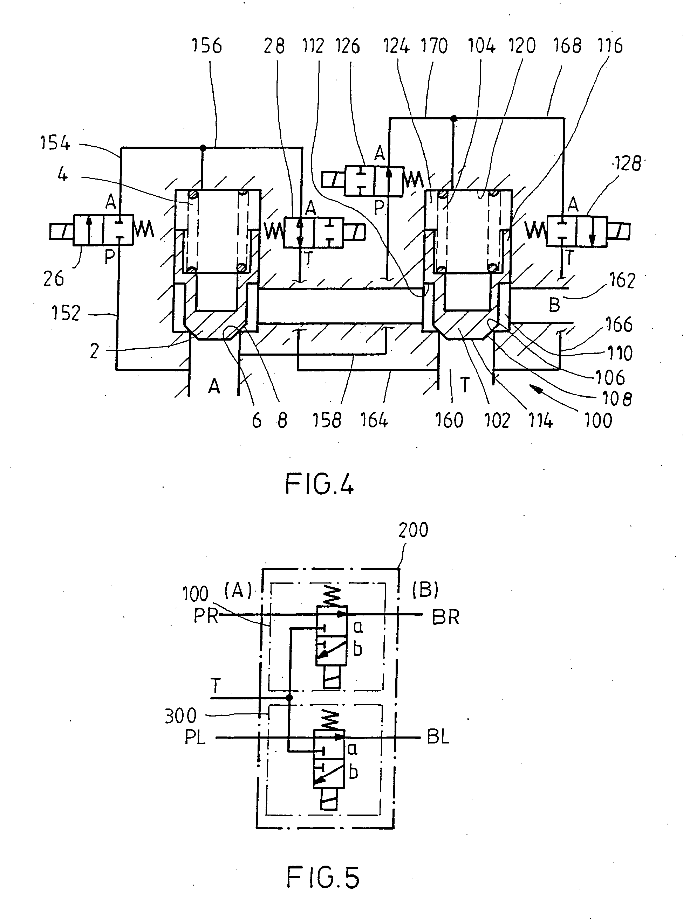

Fig. 4 zeigt eine Ventileinheit 100 entsprechend dem zweiten Ausführungsbeispiel, die ein vorgesteuertes Ventil mit einem Hauptkolben 2, dessen Sitzfläche 8 gegen ein Ventilsitz 6 durch eine Feder 4 vorgespannt ist, sowie mit Pilotventilen 26 und 28 entsprechend dem vorgesteuerten Ventil 1 des ersten Ausführungsbeispiels aufweist.

Das Pilotventil 26 beim zweiten Ausführungsbeispiel stellt im Unterschied zum ersten Ausführungsbeispiel über einen an den Druckanschluss P angeschlossenen Vorsteuerkanal 152 die Druckmittelverbindung mit dem Einlassanschluss A her. Im Unterschied zum ersten Ausführungsbeispiel stellt das Pilotventil 28 über einen an seinen Tankanschluss T Tankkanal 158 Druckmittelverbindung mit einer Tankleitung 160 her.

Im Auslasskanal 162 zum Auslassanschluss B ist beim zweiten Ausführungsbeispiel ein zusätzlicher Hauptkolben 102 vorgesehen, dessen von der Sitzfläche 108 umgebene Stirnfläche 114 zu der Tankleitung 160 weist. Der Hauptkolben 102 weist ebenfalls eine Ringfläche 112 mit einem Ringraum 110 auf, der mit dem Auslasskanal 162 in Druckmittelverbindung steht. Der Hauptkolben 102 ist von einem Stützabschnitt 120 aus durch eine Druckfeder 104 gegen den Ventilsitz 106 vorgespannt.

Durch ein Abheben des Hauptkolbens 102 vom Ventilsitz 106 wird eine Druckmittelverbindung zwischen dem Auslasskanal 162 und der Tankleitung 160 aufgesteuert.

Der Druckanschluss P eines stromlos offenen Pilotventils 126 steht über einen Vorsteuerkanal 164 mit dem Einlassanschluss A in Druckmittelverbindung, während der Arbeitsanschluss A des Pilotventils 126 über einen Druckkanal 170 mit dem Druckraum 124 in Druckmittelverbindung steht. Somit ist der Druckraum 124 ist über das stromlose Pilotventil 126 mit dem Einlassanschluss A verbunden.

Der Arbeitsanschluss A eines stromlos geschlossenen Pilotventils 128 steht über einen Vorsteuerkanal 168 mit dem Druckraum 124 in Druckmittelverbindung, während der Tankanschluss T des Pilotventils 128 mit dem Tankanschluss T in Druckmittelverbindung steht. Somit ist der Druckraum 124 über das das bestromte Pilotventil 128 mit der Tankleitung 160 verbunden.

Die Ventileinheit 100 des zweiten Ausführungsbeispiels hat die Funktion eines 3/2-Wegeventils, wie es in der Prinzipdarstellung im oberen Abschnitt von Fig. 5 gezeigt ist. Durch den Hauptkolben 2 der Ventileinheit 100 wird bei stromlosem Pilotventil 26, 28 der Druckraum 4 zum Tank T hin entlastet, so dass in Abhängigkeit vom Druck am Einlassanschluss A der Strömungsquerschnitt zwischen Ventilsitz 6 und Sitzfläche 8 in einfacher Weise aufgesteuert werden kann.

Zum Schließen der Druckmittelverbindung zwischen dem Einlassanschluss A und dem Auslassanschluss B werden die Elektromagneten der Pilotventile 26, 28 bestromt, so dass das Pilotventil 26 in seine geöffnete Schaltstellung und das Pilotventil 28 in seine geschlossene Schaltstellung gebracht wird.

Damit wird Druckmittel vom Einlassanschluss A in den Druckraum 24 geführt und aufgrund der Druckerhöhung in Druckraum 24 ein Schließen des Hauptkolbens 2 und damit eine Unterbrechung der Druckmittelverbindung zwischen dem Einlassanschluss A und dem Auslassanschluss B bewirkt.

Während der vorstehend genannten Ansteuerung des Hauptkolbens 2 befindet sich der Hauptkolben 102 in der geschlossenen Schaltstellung, in der eine Druckmittelverbindung zwischen den Tankanschluss T und dem Auslassanschluss B unterbrochen ist. Diese Schaltstellung wird erreicht, indem die Pilotventile 126, 128 stromlos sind, so dass Druckmittel vom Arbeitsanschluss A über das Pilotventil 126 in den Druckraum 124 gelangt, während eine Druckmittelverbindung zwischen dem Druckraum 124 und dem Tankanschluss T über das geschlossene Pilotventil 128 abgesperrt ist.

Zum Einstellen des Schaltstellung b der Ventileinheit 100 entsprechend Fig. 5 werden die Pilotventile 26, 28, 126, 128 bestromt, so dass die Pilotventile 26 und 128 in die offene Schaltstellung und die Pilotventile 28, 126 in die geschlossene Schaltstellung gelangen. Dadurch gelangt Druckmittel von Arbeitanschluss A über das Pilotventil 26 in den Druckraum 24 am Hauptkolben 2 und bewirkt dieses eine Druckerhöhung in Druckraum 24 ein Verbleiben des Hauptkolbens 2 in der geschlossenen Schaltstellung.

Da sich das Pilotventil 28 in der geschlossenen Schaltstellung befindet, wird der Druckraum 4 nicht zum Tankanschluss T hin entlastet. Gleichzeitig ist die Druckmittelverbindung zwischen den Druckraum 124 am Kolben 102 zwischen dem Tankanschluss T und dem Druckraum 124 aufgesteuert, so dass, da die Druckmittelverbindung zwischen den Arbeitsanschluss A und dem Druckraum 124 durch das geschlossene Pilotventil 126 zugesteuert ist, der Druckraum 124 zum Tankanschluss T hin entlastet ist.

Der Druck im Auslassanschluss B wirkt auf die Ringfläche 112 am Hauptkolben 102 und bewirkt aufgrund des entlasteten Druckraums 124 ein Abheben des Sitzfläche 108 vom Ventilsitz 106. Somit wird die Druckmittelverbindung zwischen dem Auslassanschluss B und dem Tankanschluss T aufgesteuert.

Ein schnelles Schließen der Druckmittelverbindung zwischen dem Auslassanschluss B und dem Tankanschluss T wird erreicht, indem den Elektromagneten der Pilotventile 126, 128 kein elektrischen Strom zugeführt wird, so dass das Pilotventil 126 in die offene Schaltstellung und das Pilotventil 128 in die geschlossene Schaltstellung gelangt. Somit strömt Druckmittel vom Arbeitsanschluss A durch das geöffnete Pilotventil 126 in den Druckraum 124, so dass die Sitzfläche 108 des Hauptkolben 102 mit dem Ventilsitz 106 mit hoher Geschwindigkeit in Anlage gelangt und folglich die Druckmittelverbindung zwischen dem Auslassanschluss B und dem Tankanschluss T abgesperrt wird.

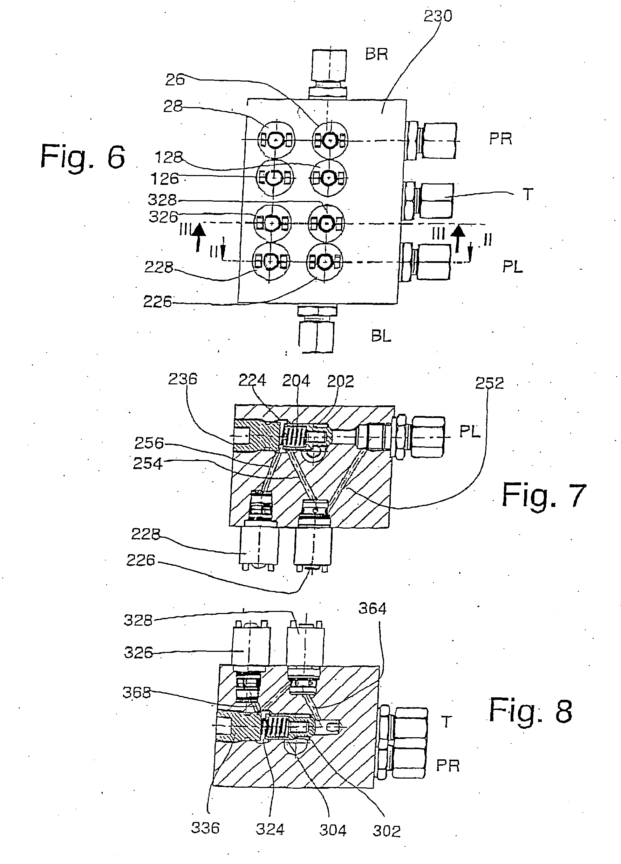

Fig. 5 zeigt ein vorgesteuertes Ventil in der Prinzipdarstellung entsprechend dem dritten Ausführungsbeispiel. Die Fig. 6 bis 11 zeigen Ansichten einer in einem Ventilgehäuse vorgesehenen Ventilgruppe 200 entsprechend dem dritten Ausführungsbeispiel.

In der Ventilgruppe 200 des dritten Ausführungsbeispiels sind zwei Ventileinheiten 100, 300 entsprechend dem zweiten Ausführungsbeispiel parallel vorgesehen, wobei beide Ventileinheiten 100, 300 mit dem Tankanschluss T verbunden sind. Zu einer besseren Unterscheidung der Anschlüsse beim dritten Ausführungsbeispiel werden in den Figuren 5 bis 11 die Einlassanschlusse statt mit A mit PR bzw. PL bezeichnet, während die Auslassanschlusse statt B mit BR bzw. BL bezeichnet werden.

Die Ventilgruppe 200 des dritten Ausführungsbeispiels hat die Funktion, eine Druckmittelströmung zwischen dem Einlassanschluss PR und dem Auslassanschluss BR bzw. zwischen dem Auslassanschluss BR und dem Tankventil T zu schalten, sowie eine Druckmittelströmung zwischen dem Einlassanschluss PL und dem Auslassanschluss BL sowie zwischen dem Auslassanschluss BL und dem Tankanschluss T zu schalten.

In der Ventilgruppe 200 des dritten Ausführungsbeispiels liegen die Ventileinheiten 100, 300 vor, die jeweilige Hauptkolben 2, 102, 202, 302 haben, die durch Pilotventile 26, 28; 126, 128; 226, 228 und 326, 328 angesteuert werden. Die Ventilgruppe 200 des dritten Ausführungsbeispiels weist ein quaderförmiges Ventilgehäuse 230 auf, in dem sowohl die Hauptkolben, die Pilotventile als auch die Anschlüsse der Ventilgruppe 200 vorgesehen sind.

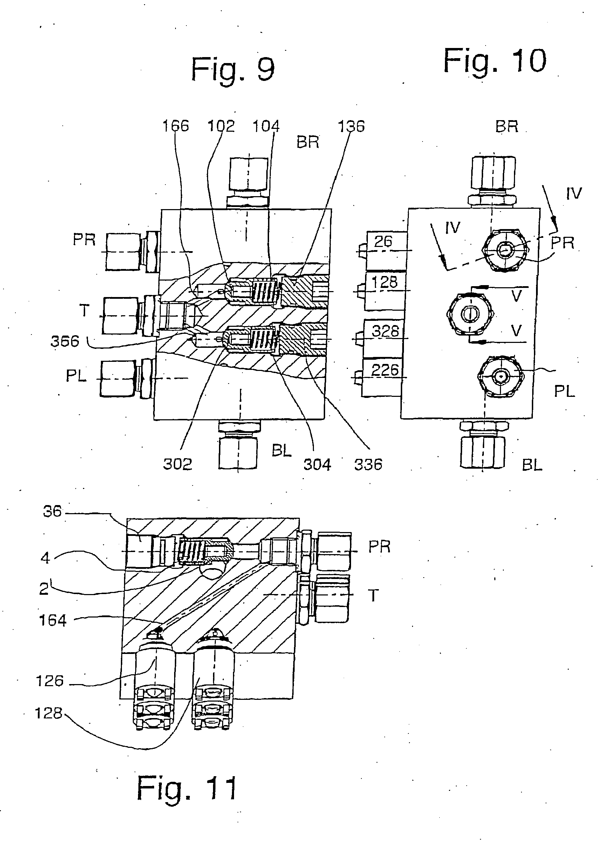

Fig. 6 zeigt eine Draufsicht auf die Ventilgruppe entsprechend dem dritten Ausführungsbeispiel, Fig. 7 einen Schnitt in der Ebene II-II aus Fig. 6, Fig. 8 eine Schnittansicht in der Ebene III-III von Fig. 6, Fig. 9 eine teilgeschnittene Untersicht der Ventilgruppe 200 aus Fig. 6, wobei der Schnitt in der Ebene V-V in Fig. 10 ausgeführt ist, Fig. 10 eine Ansicht von rechts der Ventilgruppe aus Fig. 6 und Fig. 11 eine Schnittansicht in der Ebene IV-IV von Fig. 10.

Bei der nachfolgenden Beschreibung wird auf die Gesamtheit der Fig. 6 bis 11 Bezug genommen.

Die Hauptkolben 2, 102, 202, 302 der vorgesteuerten Ventile sind in das Ventilgehäuse 230 in Fig. 6 in Querrichtung eingebracht und in den Schnittansichten von Fig. 11, Fig. 9 und Fig. 7 gezeigt. Die Druckfedern 4, 104, 204 und 304 stützen sich an Verschlussschrauben 36, 136, 236, 336, wie in den Fig. 11, 9, 7 gezeigt, ab.

Die Einlassanschlüsse PL und PR sowie der Tankanschluss T erstrecken sich parallel zu den zueinander parallel angeordneten Hauptkolben 2, 102, 202, 302. In Längsrichtung des Ventilgehäuses 230 sind die Auslassanschlusse BL und BR vorgesehen. Die Pilotventile 26, 28, 126, 128, 226, 228, 326, 328 sind senkrecht zur Querrichtung von Fig. 6 in das Ventilgehäuse 230 eingebracht. Die Pilotventile 226, 228 bewirken in gleicher Weise wie die Pilotventile 26, 28 bezüglich des Hauptkolbens 2 eine Vorsteuerung des Hauptkolbens 202. Die Pilotventile 326, 328 bewirken in gleicher Weise wie die Pilotventile 126, 128 bezüglich des Hauptkolbens 102 eine Vorsteuerung des Hauptkolbens 302.

Das Pilotventil 226 ist ein stromlos geschlossenes Ventil und stellt, wie es in Fig. 7 gezeigt ist, eine Druckmittelverbindung zwischen dem Einlassanschluss PL und dem Druckraum 224 über den Vorsteuerkanal 252 und den Druckkanal 245 her. Das Pilotventil 228 ist stromlos offen und stellt eine Druckmittelverbindung zwischen den Druckraum 224 und dem Tankanschluss T über einen in Fig. 7 gezeigten Vorsteuerkanal 256 und über einen nicht dargestellten Kanal her. In gleicher Weise wie das Pilotventil 126 über den in Fig. 11 gezeigten Vorsteuerkanal 164 mit dem Einlassanschluss PR verbunden ist, ist das Pilotventil 326 über einen nicht dargestellten Vorsteuerkanal mit dem Einlassanschluss PL verbunden.

Das Pilotventil 326 ist ein stromlos offenes Ventil und ist mit dem Druckraum 324 des Hauptkolbens 302 über einen Vorsteuerkanal 368, der in Fig. 8 gezeigt ist, verbunden. Die Tankkanäle 166, 366 münden wie in Fig. 9 gezeigt in den Tankanschluss T.

Durch die kompakte Gestaltung der Ventilgruppe 200 aus den Fig. 6 bis 11 lassen sich 3/2-Wegeventile entsprechend Fig. 5 mit jeweils 2/2-Hauptventilen und 4 Pilotventilen in kompakter und einfach zu montierender Anordnung umsetzen.

Die Funktion jeder Ventileinheit 100, 300 der Ventilgruppe 200 aus Fig. 5 entspricht der der in Fig. 4 gezeigten Ventileinheit 100.

Die Hauptkolben 2 der Ventileinheiten 100, 300 sind wie bereits im ersten Ausführungsbeispiel beschrieben vorzugsweise Kunststoff-Logikkolben.

Durch die erfindungsgemäßen Ventilanordnungen lassen sich auch für Lastkraftwagen ein schnelles Schalten von hohen Volumenströmen, beispielsweise bis zu 60 Liter/Min, mit minimalen Druckverlust umsetzen. Derartige vorgesteuerte Ventile sind beispielsweise für die Antiblockersysteme oder für die digitale Regelung von hydraulischen Achsen, beispielsweise bei Lastkraftwagen, einsetzbar. Durch das Spritzgießen der Ventilkolben ist keine mechanische Nacharbeit notwendig und ist ein dichter Ventilsitz im Gehäuse realisierbar.

Die Erfindung betrifft ein vorgesteuertes Ventil mit einem 2/2-Wege-Haupkolben und zwei schnell schaltenden 2/2-Wege-Pilotventilen zur Vorsteuerung des Hauptkolbens, um großen Volumenströme schnell schalten zu können. Derartig vorgesteuerte Ventile lassen sich in Gruppen zur Realisierung eines 3/2-Wegeventils und in Gruppen von einer Vielzahl von derartigen Wegeventile zusammenfassen.

## Patentansprüche

1. Vorgesteuertes Ventil (1) mit einem 2/2-Wege-Hauptkolben (2) und zwei schnell schaltenden 2/2-Wege-Pilotventilen (26, 28) zur Vorsteuerung des Hauptkolbens (2).

2. Vorgesteuertes Ventil nach Anspruch 1, wobei ein Pilotventil (26) in eine mit einem Druckanschluss (A) verbundene Druckleitung (52, 54) geschaltet ist und ein weiteres Pilotventil (28) in eine mit einem Tank (T) verbundene Tankleitung (56, 58) geschaltet ist.

3. Vorgesteuertes Ventil nach Anspruch 1 oder 2, wobei das Druckleitung-Pilotventil (26) stromlos geschlossen ist und das Tankleitung-Pilotventil (28) stromlos offen ist

4. Vorgesteuertes Ventil nach einem der vorhergehenden Ansprüche, wobei die Hauptkolbenachse parallel zur Achse von zumindest einem der Anschlüsse Druckanschluss (A) und Tankanschluss (T) verläuft.

5. Vorgesteuertes Ventil nach einem der vorhergehenden Ansprüche, wobei die Pilotventile (26, 28) für Antiblockiersysteme für PKWs verwendbare Ventile sind.

6. Vorgesteuertes Ventil nach einem der vorhergehenden Ansprüche, wobei der Hauptkolben (2) aus Kunststoff gefertigt ist.

7. Vorgesteuertes Ventil nach einem der vorhergehenden Ansprüche, wobei der Hauptkolben (2) direkt und dicht in einem metallischen Gehäuse (30) geführt ist.

8. Vorgesteuertes Ventil nach einem der vorhergehenden Ansprüche, wobei der Hauptkolben (2) dünnwandig ausgebildet ist

9. Vorgesteuerte, als 3/2 Wegeventil ausgebildete Ventileinheit (100) mit zwei vorgesteuerten Ventilen nach Anspruch 1.

10. Ventilgruppe nach Anspruch 9, wobei ein erstes Pilotventil (26) zur Verbindung mit einem Druckanschluss (A) stromlos geschlossen ist, ein zweites Pilotventil (28) zur Verbindung mit einem Tankanschluss (T) stromlos offen ist, ein drittes Pilotventil (126) zur Verbindung mit dem Druckanschluss (A) stromlos offen ist und ein viertes Pilotventil (128) zur Verbindung mit einem Tankanschluss (T) stromlos geschlossen ist.

11. Ventilblock mit einer Ventilgruppe nach Anspruch 9.

12. Ventilblock mit zwei parallelen Ventilgruppen nach Anspruch 9.
